# EUROPEAN PATENT APPLICATION

(11) **EP 1 355 476 A1**
(43) Date of publication of application: **22.10.2003**
(21) Application number: 02252669.3
(22) Date of filing: 16.04.2002
(51) Int. Cl.: H04L 29/12

(54) **Processing device for address allocation**

(71) Applicant: Red-M (Communications) Limited, Wexham, Slough SL3 6PJ (GB)
(72) Inventor: Curtis, Jeremy, Dunstable, Bedfordshire LU5 4HR (GB)
(74) Representative: Finnie, Peter John

(57) **Abstract**

In the present invention we provide a processing device for coupling to a communications network, the processing device being adapted to determine a first address to allow the processing device to communicate with at least a second processing device coupled to the network, the second processing device having a second address, wherein the first and second address include at least first and second portions. The processing device includes a processor which is adapted to determine the first address in accordance with a predetermining addressing mechanism; determine the second address; compare the first portions of the first second addresses; and, determine a new first address if the first portions of the first and second addresses are not equal, the first portion of the new first address being the same as the first portion of the second address. Accordingly, the invention facilitates IP communication between devices, particularly during the initialisation and set-up periods, through the novel use of IP address assignment techniques. The invention is applicable whether the devices are using DHCP, APIPA, static addressing or other mechanisms for IP address assignment.

## Description

### Field of the Invention

The present invention relates to a processing device for coupling to a communications network and a method of determining a first address for the processing device. In particular, the present invention relates to determining IP addresses for processing devices which are coupled to a network, such as an Ethernet network.

### Background of the Invention

IP addresses are used to allow data to be directed to specific computers coupled to networks, such as Ethernet networks, or the Internet.

IP addresses include two separate portions, namely a subnet mask portion and a device specific portion. The subnet mask is an identifier which is representative of the particular network to which the device is connected, whereas the device specific portion is an identifier which is unique to the individual device. Accordingly, when data is being transferred in accordance with the IP address, the data will be transferred between networks (or separate subnet portions) in accordance with the subnet mask, and across the network to the destination device in accordance with the device specific portion of the IP address.

Accordingly, if the subnet mask does not correspond to that of the current network, then the data will be transferred to a router which will then transfer the data to the correct network. Once the data has reached the correct network, the data is then transferred in accordance with the device specific portions of the address in the normal way.

From this it will be appreciated that devices coupled to a single network should all be assigned the same subnet mask in their respective IP addresses. Failure to do so means that data packets will be transferred to a router and then transferred from the router back to the network and on to the correct device, thereby increasing the length of the route taken by the data. This can therefore lead to problems in communication between two devices which are coupled to the same network but which have different subnet masks in their respective IP addresses.

In order to overcome this, IP addresses are generally assigned in one of a number of ways.

The most basic method of assigning IP addresses is to assign the IP addresses manually. This can be achieved for example by a system administrator, who simply enters the IP address into a device when it is added to the network. During this process, it is important to ensure that the correct subnet mask is used and also to ensure that the resulting IP address is unique. This can therefore be a time consuming task which can be extremely difficult with a large number of machines.

One problem with this technique is that typically only a limited number of IP addresses will be available for any one subnet mask. Accordingly, for larger networks it is not possible to assign a respective IP address to each device coupled to the network.

In order to overcome this, dynamic IP address assignment techniques are used. One of these, which is known as DHCP (Dynamic Host Configuration Protocol), operates by assigning IP addresses to devices on a lease basis. This is achieved by having the devices request an IP address from a central DHCP server which is then assigned to the device by a DHCP server. The DHCP server then assigns an available IP address to the device for a set period of time. As a result, devices which are not currently transferring data, and which accordingly do not require an IP address, will generally not have an IP address once an existing lease has expired. When the device needs to communicate again, the device simply requests a new IP address from the DHCP server.

This system suffers from the drawback however that a DHCP server is required for the network. Should a fault occur with the DHCP server, then IP addresses will not be correctly assigned to the devices and accordingly, communication between the devices on the network fails.

In order to alleviate this problem, a more recent addressing protocol known as APIPA (Automatic Private IP Addressing) is sometimes used, such as, for example in the Windows™ operating system.

The APIPA system operates by setting the subnet mask to a predetermined default value, such as, 255.255.0.0 which is chosen depending on the current implementation. The IP addresses are then selected from a predetermined range of addresses such as 169.254.0.1 through to 169.254.255.254. In use, the IP addresses are selected using a hashing function to generate a random address within the predetermined range.

Typically, the Windows™ operating system is set up to attempt to assign an IP address using a DHCP system. However, if a DHCP server is not available to assign an IP address, then the APIPA system is used.

However, as will be appreciated by a person skilled in the art, if a DHCP system which has previously been used on a network fails, then a new device added to the network will be unable to determine an IP address using the DHCP system. In this case, an alternative system, such as the APIPA system, will be used to determine an IP address. In this case, the subnet mask of the determined IP address may differ to the subnet mask used by other devices on the network. This can in turn lead to problems transferring data between devices on the network.

### Summary of the Invention

In accordance with a first aspect of the present invention, we provide a processing device for coupling to a communications network, the processing device being adapted to determine a first address to allow the processing device to communicate with at least a second processing device coupled to the network, the second processing device having a second address, the first and second addresses including at least first and second portions, the processing device including a processor adapted to:
a. Determine the first address in accordance with a predetermined addressing mechanism;
b. Determine the second address;
c. Comparing the first portions of the first and second addresses;
d. Determining a new first address if the first portions of the first and second addresses are not equal, the first portion of the new first address being the same as the first portion of the second address.

In accordance with a second aspect of the present invention, we provide a method of determining a first address for a first processing device coupled to a communications network, the first processing device being adapted to communicate with a second processing device coupled to the communications network, the second processing device having a second address, the first and second addresses including at least first and second portions, and the method comprising:
a. Causing the first processing device to determine the first address in accordance with a predetermined addressing mechanism;
b. Causing the first processing device to determine the second address;
c. Comparing the first portions of the first and second addresses;
d. Causing the first processing device to determining a new first address if the first portions of the first and second addresses are not equal, the first portion of the new first address being the same as the first portion of the second address.

Accordingly, the present invention relates to a processing device for coupling to a communications network and a method of configuring the processing device. The invention facilitates IP communication between devices, particularly during the initialisation and set-up periods, through the novel use of IP address assignment techniques. The invention is applicable whether devices are using DHCP, APIPA, static addressing or other mechanisms for IP address assignment.

This is achieved by attempting to determine a first address for the processing device in accordance with a predetermined addressing mechanism. The determined first address is then compared to the address of a second processing device (referred to as the second address). If the first portions of these addresses are not equal, then a new first address is determined using the first portion of the second address.

Accordingly, from this it will be appreciated that if the first portion of the address corresponds to the subnet mask, then the present invention can be used to ensure that a processing device will always be assigned the desired subnet mask when it is coupled to the network.

Typically the predetermined addressing mechanism is DHCP. This is because DHCP is a well known extensively used protocol assigning IP addresses. However, different mechanisms may be used for different address types.

In this case, if a DHCP server is coupled to the network the processor is preferably adapted to detect the DHCP server and attempt to obtain the first address from the DHCP server.

If the processor is unable to obtain the first address from the DHCP server the processor is usually adapted to determine the first address in accordance with the APIPA addressing protocol.

However, it will be realised that other techniques may be used if different addressing mechanisms are used by the network. In addition to this, it is not essential to attempt to assign an address using APIPA if an address cannot be located using a DHCP server.

In any event, if APIPA is used then the processor is adapted to determine the first address by setting the first portion of the first address equal to a predetermined first portion defined within the APIPA addressing protocol and generating the second portion of the first address using a predetermined algorithm.

As an alternative to using an external DHCP server however it is also possible for the processing device to further comprise an internal DHCP server coupled to the processor. In this case, if no DHCP server is coupled to the network the processor is adapted to obtain the first address from the internal DHCP server. However, the internal DHCP server will not be used if an external DHCP server is present because this can cause a conflict between the IP addresses generated by each DHCP server which can again lead to failures within the network.

Typically the processor is adapted to determine a new first address in step (d) by setting the first portion of the first address equal to the first portion of the second address and, generating the second portion of the first address using a predetermined algorithm. Thus, if the processor determines that the subnet masks of the first and second addresses differ, then the processor is adapted to generate a new first address using the sub-net mask of the second address. Once this has been completed, the predetermined algorithm employed by the APIPA system can be used to determine the second portion of the address.

The processor is preferably further adapted to compare each determined first address to other addresses currently utilized on the network and generate a new first address if the determined first address corresponds to an address currently utilized in the network. This is carried out to ensure that a conflict will not occur when the IP addresses are assigned.

The processor is preferably adapted to perform step (d) by generating a broadcast frame and receiving a response frame from the second processing device, the response frame including the second address. This is particularly advantageous as it means that the first processing device need not have any knowledge of the IP address of the second processing device.

The processing device may be any suitable processing device but one option is for the processing device to comprise a network server. This technique is particularly advantageous for use on devices, such as network servers, which do not include any input or output devices and which therefore have to be configured remotely using a setup PC coupled to the network. By using the present invention the network server can communicate with the setup PC thereby ensuring that the network server can be correctly configured.

Accordingly, in this case the processing device is typically adapted to receive setup commands from the second processing device, which forms the setup PC.

### Brief Description of the Drawings:

An example of the present invention will now be described with reference to the accompanying drawings, in which:
Figure 1 is a schematic diagram of a network including a network server which implements the present invention;
Figure 2 is a schematic diagram of the network server of Figure 1; and,
Figure 3 is an example of the processes carried out by the processor of the network server.

### Detailed Description

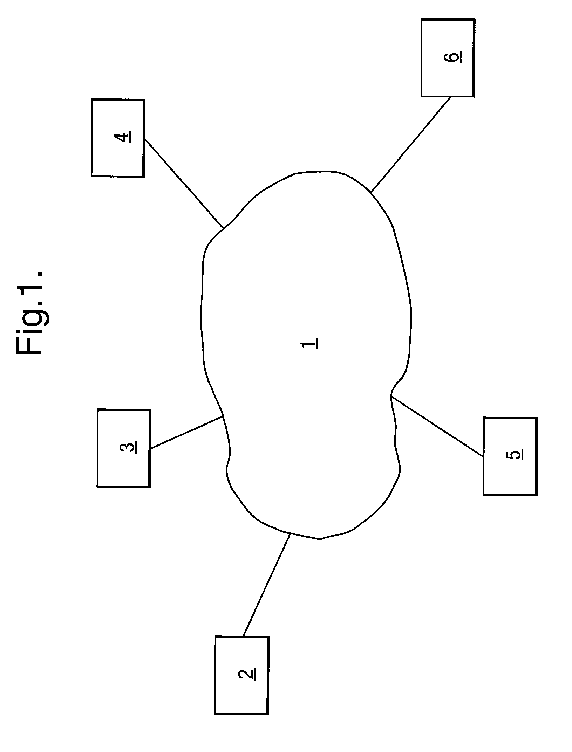

Figure 1 shows a local area network (LAN) 1 to which is coupled a processing device 2 according to the present invention, and a number of end stations 3,4,5. A DHCP server 6 is also provided as shown.

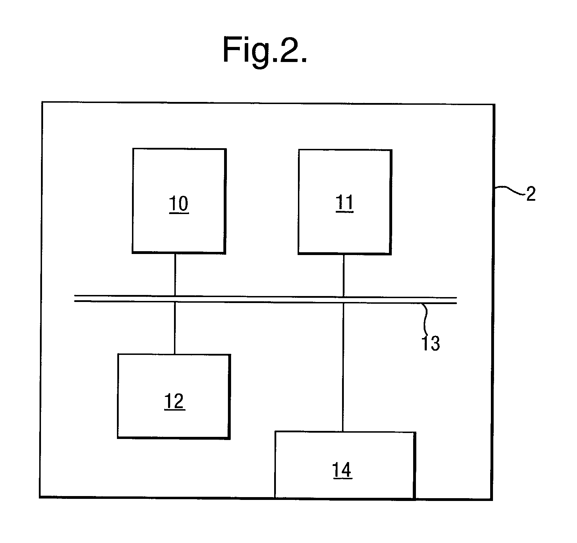

The configuration of the processing device 2 is shown in more detail in Figure 2. As shown, the processing device includes a processor 10, a memory 11 and an internal DHCP server 12, all of which are coupled together via a bus 13. Also coupled to the bus 13 is a LAN interface 14 which is used to couple the processing device 2 to the LAN 1.

As shown in Figure 2, the processing device 2 does not include an input or output device and is instead designed to be remotely configured by one of the end stations 3,4,5. Accordingly, when the processing device 2 is first coupled to the network, it is necessary for the processing device 2 to determine an IP address to allow it to communicate with a respective one of the end stations 3.

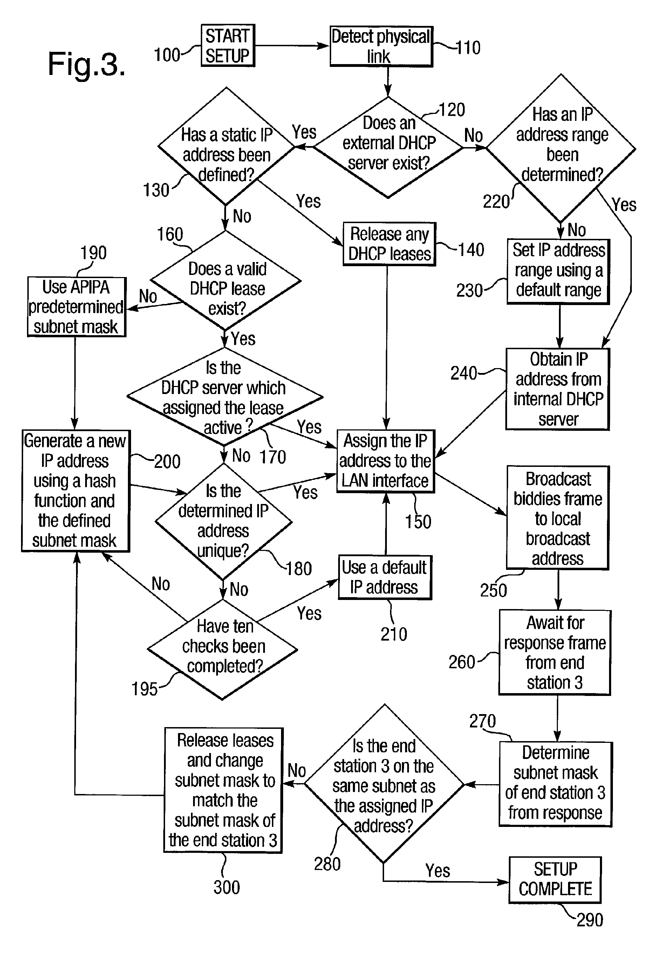

In order to achieve this, the processor 10 is adapted to carry out the procedures shown in Figure 3.

Accordingly, once the processing device 2 is initially activated it will begin the setup procedure as shown at step 100.

The first stage of the setup procedure is for the processor 10 to determine whether a physical link has been established with the LAN 1 via the LAN interface 14 at step 110. If a physical link has not been established, the processor 10 will simply halt the setup procedure until a physical link has been established.

Once the physical link has been established, the processor 10 then determines whether an external DHCP server exists as shown at step 120.

In order to do this, the standard DHCP techniques are used. Thus, the processor 10 will operate to generate a DHCPDISCOVER data packet which is transferred via the LAN interface 14 to the LAN 1. The DHCPDISCOVER data packet is then flooded through the LAN 1 where it will be received by the end stations 3,4,5 and the DHCP server 6.

DHCP servers are adapted to respond to a DHCPDISCOVER data packet by generating a DHCPOFFER data packet which includes an indication of available IP addresses. Accordingly, the processor 10 will wait a predetermined amount of time to see if a response to a DHCPDISCOVER data packet is received. If no response is received it determines that no external DHCP server exists, whereas if a response is obtained, then it is determined that the DHCP server 6 does exist.

In the latter case, the processor 10 is typically adapted to continue the DHCP process to obtain a leased IP address although this may not be the case if a valid lease is already assigned to the processing device. In order to obtain the lease, the processor 10 generates a DHCPREQUEST data packet which requests the IP address indicated in the DHCPOFFER data packet. The DHCP REQUEST data packet is transferred back to the DHCP server 6 which will send a DHCPACK packet to the processing device 2.

The DHCPACK data packet includes an indication of the configuration parameters of the IP address which will be assigned. If this is acceptable to the processor 10, then the processor 10 will accept the supplied IP address. If the configuration parameters are not acceptable to the processor 10 then instead it will generate a DHCPDECLINE data packet indicating to the DHCP that the IP address is not required. This allows the DHCP server 6 to assign the IP address to other computing devices or end stations coupled to the LAN 1.

In the case in which the DHCP server 6 cannot provide an IP address then a DHCPNAK data packet is transferred to the processing device 2 indicating that an IP address cannot be provided. Once it has been determined that a DHCP server exists, the processor 10 moves on to step 130 and determines whether a static IP address has been defined. This will only occur if the processing device 2 has previously been used with a static IP address assigned by a network administrator. In this case, if a static IP address has been previously defined then it is not necessary to determine a new IP address and accordingly, any DHCP leases obtained from the DHCP server 6 are released at step 140 and the IP address of the LAN interface 14 is maintained as the static address indicated by step 150.

Alternatively however if no static IP address has been defined, as will be the case for example when the processing device 2 is first activated, then the processor 10 accesses the memory 11 to determine whether a valid DHCP lease exists.

A DHCP lease may exist for a number of reasons. Firstly, the processing device 2 may have been connected to the current LAN 1, or an alternative LAN, during which time an IP address may have been assigned by a DHCP server. If the lease associated with this IP address has not expired, then the IP address will remain valid and an indication of this will be stored in the memory 11. Alternatively, a DHCP lease might have been assigned when the processor 10 initially determines whether a DHCP server 6 existed at step 120, as described above.

If a valid DHCP lease does exist, then the processor 10 moves onto step 150 and determines whether the DHCP server which assigned the lease is currently active. Thus, for example, it may be that the DHCP server which assigned the lease has since failed, or alternatively was located on an alternative previous LAN to which the processing device was connected. In either of these cases, with the DHCP server which assigned the lease not currently functioning it is possible that the IP address defined by the DHCP lease is not unique on the LAN.

Accordingly, the processor 10 operates to obtain an indication of the IP addresses currently used by the LAN 1 (which can be stored in the memory 11) and compares the IP address defined in the DHCP lease to this list at step 160. This allows the processor 10 to determine if the IP address defined in the DHCP lease is unique.

Assuming that the IP address is unique it is assigned to the LAN interface 14 at step 150.

Similarly, if the DHCP server is active, then inherently the IP address must be unique and accordingly, the processor 10 can simply assign the IP address directly to the LAN interface 14 as shown at step 150.

In the case in which a valid DHCP lease does not exist at step 160, for example if a lease could not be assigned by the DHCP server 6, then the processor 10 then goes onto use the APIPA scheme to determine an IP address as shown at step 190.

In order to do this, the processor 10 sets the subnet mask to a predetermined value, such as 169.254.0.0 which will be defined within the particular APIPA implementation. The processor 10 then goes onto step 200 and generates a new IP address using a hash function and the defined subnet mask. As a result, the processor 10 operates to generate an IP address in a predetermined APIPA range, such as 169.254.128.2 to 169.254.128.254 which is again set depending on the APIPA implementation.

The processor 10 compares the determined IP address to IP addresses currently used on the LAN 1, as shown at step 180 and as described above. Again, if the address is unique it is then assigned to the LAN interface 14 as shown at step 150.

In both of the above mentioned cases, should it be determined that the IP address selected either by the DHCP server, or by the use of the APIPA scheme is not unique, then the processor 10 goes on to step 195 and determines how many addresses have been checked. In either case, if less than ten addresses have been checked then the processor 10 will proceed back to step 200 to determine a new IP address using the hash function. In this case, the processor 10 will use the subnet mask which is either the subnet mask defined within the particular implementation of the APIPA addressing protocol, or the subnet mask contained in the previous DHCP server lease.

If the uniqueness of ten IP addresses has been checked without an IP address being successfully defined, then the processor 10 is adapted to move to step 210 and simply use a default IP address, which in this example is 169.254.128.1. The system then ignores the possibility that this may clash and simply assigns the IP address to the LAN interface 14 at step 150.

Returning back to step 120, if an external DHCP server does not exist, then the processor 10 moves onto step 220 in order to use the internal DHCP server 12. In order to do this, it is necessary for an IP address range to have been determined. If this has not been determined then the processor 10 obtains a default IP address range from the memory 11. This may be any default range which has previously been defined but is typically the default range selected in the APIPA implementation. Thus, in this example, the default range is set to 169.254.128.2 to 169.254.128.254.

Once an IP address range has been determined, the processor then operates to obtain an IP address from the internal server in accordance with standard DHCP procedures, as shown at step 140. The determined IP address is then assigned to the LAN interface 14 as shown at step 150.

Once the IP address has been assigned to the LAN interface 14, the processor 10 broadcasts a biddies frame on to the LAN 1.

The biddies frames are broadcast to a local broadcast address meaning that they are then forwarded on to every device connected to the LAN 1 which is associated with the broadcast address. Accordingly, the biddies data packet is transferred at least to each of the end stations 3,4,5 at step 250. The processor 10 then waits for a response to be received.

In general, the processing device 2 is designed to be configured using one of the end stations 3,4,5. Accordingly, the end station which is to be used for the set-up procedure is adapted to await for the arrival of a broadcast biddies frame from the processing device 2. This is typically achieved by having the end station 3 run applications software for configuring the processing device 2.

During this time, the end station 3 will typically periodically send its own biddies frame to a local broadcast address including its own IP address, any default gateway address, the DNS IP addresses and any WINS server IP addresses.

If no biddies frames are received by the end station 3 within a predetermined amount of time of the applications software being activated, then this will be indicated to the user indicating that a fault with the setup procedure has occurred, such as for example that the processing device 2 has been unable to obtain a valid IP address, or the like. This will then cause the user to start the process again from step 100.

However, if a broadcast biddies frame is received from the processing device 2 then the end station 3 is adapted to generate a response and transfer this to the IP address of the processing device 2 which is indicated in the biddies frame.

Accordingly, after having sent the biddies frame, the processing device 2 simply awaits a response from the setup PC, which in this case is the end station 3.

If a response is not received within a predetermined amount of time, this will again indicate that the process has failed and again, it will be necessary for the user to restart the setup procedure at step 100.

Once a response has been received from the end station 3 the processor 10 examines the response data packet and determines from this the IP address of the end station 3. From the IP address of the end station 3 the processor then determines the subnet mask of the end station 3 as indicated at step 270.

The processor 10 then operates to determine if the subnet mask of the IP address of the end station 3 is identical to the subnet mask of the IP address assigned to the LAN interface 14 of the processing device 2.

If the subnet mask is identical, then the system is configured such that communication between the end station 3 and the processing device 2 will then occur and accordingly the setup is complete as shown at step 290.

Alternatively, if the subnet masks are different then the processor 10 moves onto step 300 and changes the subnet address mask it currently uses. Once the new subnet address mask has been determined, so as to match the subnet address of the IP address of the end station 3, the processor then returns to step 200 to generate a new IP address using the newly determined subnet mask and the hash function.

Accordingly, this process is continued until an acceptable IP address has been determined which uses the same subnet mask as the IP address of the end station 3, thereby allowing the processing device to communicate directly with the end station 3 as required.

It will therefore be appreciated that the present invention provides a technique for automatically configuring the IP address of the end station 2 to allow it to communicate directly with the end station 3.

This procedure can be applied to any device which is capable of connecting to the LAN 1 and which is addressable using an IP address. One example is the Access Server produced by Red-M (Communications) Limited which is configured from a remote PC when it is first coupled to a LAN. The Access Server is described in more detail in the copending application GB0014431.1 filed on 13 June 2000.

## Claims

1. A processing device for coupling to a communications network, the processing device being adapted to determine a first address to allow the processing device to communicate with at least a second processing device coupled to the network, the second processing device having a second address, the first and second addresses including at least first and second portions, the processing device including a processor adapted to:
a. Determine the first address in accordance with a predetermined addressing mechanism;
b. Determine the second address;
c. Comparing the first portions of the first and second addresses;
d. Determining a new first address if the first portions of the first and second addresses are not equal, the first portion of the new first address being the same as the first portion of the second address.

2. A processing device according to claim 1, wherein the predetermined addressing mechanism is one or more of DHCP, APIPA and static addressing.

3. A processing device according to claim 2, wherein if a DHCP server is coupled to the network, the processor is adapted to:
i. Detect the DHCP server; and,
ii. Attempt to obtain the first address from the DHCP server.

4. A processing device according to claim 3, wherein if the processor is unable to obtain the first address from the DHCP server, the processor is adapted to determine the first address in accordance with the APIPA addressing protocol.

5. A processing device according to claim 4, wherein the processor is adapted to determine the first address by:
i. Setting the first portion of the first address equal to a predetermined first portion defined within the APIPA addressing protocol; and,
ii. Generating the second portion of the first address using a predetermined algorithm.

6. A processing device according to claim 2, wherein the processing device further comprises an internal DHCP server coupled to the processor, and wherein if no DHCP server is coupled to the network, the processor is adapted to obtain the first address from the internal DHCP server.

7. A processing device according to any of the preceding claims, wherein the processor is adapted to determine a new first address in step (d) by:
i. Setting the first portion of the first address equal to the first portion of the second address; and,
ii. Generating the second portion of the first address using a predetermined algorithm.

8. A processing device according to any of the preceding claims, wherein the processor is further adapted to:
i. Compare each determined first address to other addresses currently utilised on the network; and,
ii. Generate a new first address if the determined first address corresponds to a address currently utilised on the network.

9. A processing device according to any of the preceding claims, wherein the processor is adapted to perform step (b) by:
i. Generating a broadcast frame;
ii. Receiving a response frame from the second processing device, the response frame including the second address.

10. A processing device according to any of the preceding claims, wherein the processing device is a network server.

11. A processing device according to any of the preceding claims, wherein the processing device is adapted to receive setup commands from the second processing device.

12. A processing device according to any of the preceding claims, wherein the processing device is adapted to cooperate with the second processing device to allow the second processing device to configure the setup of the first processing device.

13. A processing device according to any of the preceding claims, wherein the first and second addresses are IP addresses.

14. A processing device according to any of the preceding claims, wherein the first portion of the addresses comprise a subnet address.

15. A method of determining a first address for a first processing device coupled to a communications network, the first processing device being adapted to communicate with a second processing device coupled to the communications network, the second processing device having a second address, the first and second addresses including at least first and second portions, and the method comprising:
a. Causing the first processing device to determine the first address in accordance with a predetermined addressing mechanism;
b. Causing the first processing device to determine the second address;
c. Comparing the first portions of the first and second addresses;
d. Causing the first processing device to determining a new first address if the first portions of the first and second addresses are not equal, the first portion of the new first address being the same as the first portion of the second address.

16. A method according to claim 15, wherein the predetermined addressing mechanism is one or more of DHCP, APIPA and static addressing.

17. A method according to claim 16, wherein if a DHCP server is coupled to the network, the method further comprises:
i. Detecting the DHCP server; and,
ii. Attempting to obtain the first address from the DHCP server.

18. A method according to claim 17, wherein if the first address cannot be obtained from the DHCP server, the method further comprises determining the first address in accordance with the APIPA addressing protocol.

19. A method according to claim 18, wherein the method further comprises determining the first address by:
i. Setting the first portion of the first address equal to a predetermined first portion defined within the APIPA addressing protocol; and,
ii. Generating the second portion of the first address using a predetermined algorithm.

20. A method according to claim 16, wherein if the first processing device includes an internal DHCP and no DHCP server is coupled to the network, the method further comprises obtaining the first address from the internal DHCP server.

21. A method according to any of claims 15 to 20, wherein the method of determining the new first address in step (d) comprises:
i. Setting the first portion of the first address equal to the first portion of the second address; and,
ii. Generating the second portion of the first address using a predetermined algorithm.

22. A method according to any of claims 15 to 21, wherein the method further comprises:
i. Comparing each determined first address to other addresses currently utilised on the network; and,
ii. Generating a new first address if the determined first address corresponds to a address currently utilised on the network.

23. A method according to any of claims 15 to 22, wherein the method of performing step (b) comprises:
i. Generating a broadcast frame;
ii. Receiving a response frame from the second processing device, the response frame including the second address.

24. A method according to any of claims 15 to 23, wherein the first and second addresses are IP addresses.

25. A method according to any of claims 15 to 24, wherein the first portion of the addresses comprise a subnet address.
